(19) **Europäisches Patentamt / European Patent Office / Office européen des brevets**

(11) **EP 1 609 078 B1**

(12) **EUROPEAN PATENT SPECIFICATION**

(45) Date of publication and mention
of the grant of the patent:
**01.06.2016 Bulletin 2016/22**

(21) Application number: **04721412.7**

(22) Date of filing: **17.03.2004**

(51) Int Cl.:
*G06F 15/82* (2006.01)    *G06F 9/44* (2006.01)

(86) International application number:
**PCT/SE2004/000394**

(87) International publication number:
**WO 2004/084086 (30.09.2004 Gazette 2004/40)**

(54) **DATA FLOW MACHINE**

DATENFLUSSMASCHINE

MACHINE DE CIRCULATION DE DONNEES

(84) Designated Contracting States:
**AT BE BG CH CY CZ DE DK EE ES FI FR GB GR
HU IE IT LI LU MC NL PL PT RO SE SI SK TR**

(30) Priority: **17.03.2003 SE 0300742**

(43) Date of publication of application:
**28.12.2005 Bulletin 2005/52**

(73) Proprietor: **Ziq Tag**
**224 68 Lund (SE)**

(72) Inventors:
• **MÖHL, Stefan**
**S-226 43 Lund (SE)**
• **BORG, Pontus,**
**Flow Computing AB**
**S-223 70 Lund (SE)**

(74) Representative: **Awapatent AB**
**P.O. Box 1066**
**251 10 Helsingborg (SE)**

(56) References cited:
**US-A- 4 841 436    US-A- 4 943 916
US-A- 5 021 947**

• **VERDOSCIA L. ET AL.: 'Conditional and Iterative Structures using a Homogeneous Static Dataflow Graph Model' PROCEEDINGS OF THE FIRST INTERNATIONAL CONFERENCE ON MASSIVELY PARALLEL COMPUTING SYSTEMS, 1994 May 1994, pages 391 - 401, XP002980056 & DATABASE INSPEC [Online] Database accession no. 4847708**
• **JUNG B. ET AL.: 'Node merging: A transformation on bit-level dependence graphs for efficient VLSI array design' INTERNATIONAL CONFERENCE ON APPLICATION-SPECIFIC ARRAY PROCESSORS 25 October 1993 - 27 October 1993, pages 442 - 453, XP010136818**
• **CHATTERJEE M. ET AL.: 'Buffer assignment algorithms on data driven ASICs' IEEE TRANSACTIONS ON COMPUTERS vol. 49, January 2000, ISSUE 1, pages 16 - 32, XP002903822**

**Description**

Technical Field

Generally, the present invention relates to data processing methods and apparatus, and more specifically to a method and apparatus for performing high-speed data processing in digital hardware by means of a data flow machine utilizing fine grain parallelism and large pipeline depths.

Description of the Prior Art

Many different approaches towards easy-to-use programming languages for hardware descriptions have been employed in the recent years for providing a fast and easy way to design digital circuitry. When programming data flow machines, a language different from the hardware descriptive language may be used. In principle, an algorithm description for performing a specific task on a data flow machine only has to comprise the description itself, while an algorithm description which is to be executed directly in an integrated circuit must comprise many details of the specific implementation of the algorithm in hardware. For example, the hardware description must contain information regarding the placement of registers in order to provide optimum clock frequency, which multipliers to use, etc.

For many years, data flow machines have been regarded as good models for parallel computing and consequently many attempts to design efficient data flow machines have been performed. For various reasons, earlier attempts to design data flow machines have produced poor results regarding computational performance compared to other available parallel computing techniques.

A data flow machine should not be confused with a data flow graph. When translating program source code, most compilers available today utilize data flow analysis and data flow descriptions (known as data flow graphs, or DFGs) in order to optimize the performance of the compiled program. A data flow analysis performed on an algorithm produces a data flow graph. The data flow graph illustrates data dependencies which are present within the algorithm. More specifically, a data flow graph normally comprises nodes indicating the specific operations that the algorithm performs on the data being processed, and arcs indicating the interconnection between nodes in the graph. The data flow graph is hence an abstract description of the specific algorithm and is used for analyzing the algorithm. On the other hand, a data flow machine is a calculating machine which based on the data flow graph may actually execute the algorithm.

A data flow machine operates in a radically different way compared to a control-flow apparatus, such as a von Neumann architecture (the normal processor in a personal computer is an example of a von Neumann architecture). In a data flow machine the program is the data flow graph with special dataflow control nodes, rather than a series of operations to be performed by the processor. Data is organized in packets known as tokens that reside on the arcs of the data flow graph. A token can contain any data-structure that is to be operated on by the nodes connected by the arc, like a bit, a floating-point number, an array, etc. Depending on the type of data flow machine, each arc may hold at the most either a single token (static data flow machine) a fixed number of tokens (synchronous data flow machine), or an indefinite number of tokens (dynamic data flow machine).

The nodes in the data flow machine wait for tokens to appear on a sufficient number of input arcs so that their operation may be performed, whereupon they consume those tokens and produce new tokens on their output arcs. For example: A node which performs an addition of two tokens will wait until tokens have appeared upon both its inputs, consume those two tokens and then produce the result (in this case the sum of the input tokens' data) as a new token on its output arc.

Rather than, as is done in a CPU, selecting different operations to operate on the data depending on conditional branches, a data flow machine directs the data to different nodes depending on conditional branches through dataflow control nodes. Thus a data flow machine has nodes that may selectively produce tokens on specific outputs (called a switch-node) and also nodes that may selectively consume tokens on specific inputs (called a merge-node). Another example of a common data flow control node is the gate-node which selectively removes tokens from the data flow. Many other data flow manipulating nodes are also possible.

Each node in the graph may potentially perform its operation independently from all the other nodes in the graph. As soon as a node has data on its relevant input arcs, and there is space to produce a result on its relevant output arcs, the node may execute its operation (known as firing). The node will fire regardless of other nodes being able to fire or not. Thus, there is no specific order in which the nodes' operations will execute, such as in a control-flow apparatus; the order of executions of the operations in the data flow graph is irrelevant. The order of execution could for example be simultaneous execution of all nodes that may fire.

As mentioned above, data flow machines are, depending on their designs, normally divided into three different categories: static data flow machines, dynamic data flow machines, and synchronous data flow machines.

In a static data flow machine, every arc in the corresponding data flow graph may only hold a single token at every time instant.

In a dynamic data flow machine each arc may hold an indefinite number of tokens while waiting for the receiving node to be prepared to accept them. This allows construction of recursive procedures with recursive depths that are unknown when designing the data flow machine. Such procedures may reverse data that are being processed in the recursion. This may result in wrong matching of tokens when performing calculations after the recursion is finished.

The situation above may be handled by adding markers which indicates a serial number of every token in the protocol. The serial numbers of the tokens inside the recursion are continuously monitored, and when a token exits the recursion it is not allowed to proceed as long as it can not be matched to tokens outside the recursion.

In case the recursion is not a tail recursion, context have to be stored in the buffer at every recursive call in the same way as context is stored on the stack when recursion is performed by use of an ordinary (von Neumann) processor. Finally a dynamic data flow machine may execute data-dependent recursions in parallel.

Synchronous data flow machines can operate without the ability to let tokens wait on an arc while the receiving node prepares itself. Instead, the relationship between production and consumption of tokens for each node is calculated in advance. With this information it is possible to determine how to place the nodes and assign sizes to the arcs with regard to the number of tokens that may simultaneously reside on them. Thus it is possible to ensure that each node produces as many tokens as a subsequent node consumes. The system may then be designed so that every node always may produce data since a subsequent node will always consume the data. The drawback is that no indefinite delays such as data-dependent recursion may exist in the construction.

Data flow machines are most commonly put into practice by means of computer programs run in traditional CPUs. Often a cluster of computers is used, or an array of CPUs on some printed circuit board. The main purpose for using dataflow machines has been to exploit their parallelism to construct experimental super-computers. A number of attempts have been made to construct dataflow machines directly in hardware. This has been done by creating a number of processors in an Application Specific Integrated Circuit (ASIC). The main advantage of this approach in contrast to using processors on a circuit board is the higher communication rates between the processors on the same ASIC. Up till now, none of the attempts at using dataflow machines for computation have become commercially successful.

Field Programmable Gate Arrays (FPGA) and other Programmable Logic Devices (PLD) may also be used for hardware construction. FPGAs are silicon chips that are re-configurable on the fly. They are based on an array of small random access memories, usually Static Random Access Memory (SRAM). Each SRAM holds a look-up table for a boolean function, thus enabling the FPGA to perform any logical operation. The FPGA also holds similarly configurable routing resources allowing signals to travel from SRAM to SRAM.

By assigning the logical operations of a silicon chip to the SRAMs and configuring the routing resources, any hardware construction small enough to fit on the FPGA surface may be implemented. An FPGA can implement much fewer logical operations on the same amount of silicon surface compared to an ASIC. The advantage of an FPGA is that it can be changed to any other hardware construction, simply by entering new values into the SRAM look-up tables and changing the routing. An FPGA can be seen as an empty silicon surface that can accept any hardware construction, and that can change to any other hardware construction at very short notice (less than 100 milliseconds).

Other common PLDs may be fuse-linked, thus being permanently configured. The main advantage of a fuse-linked PLD over an ASIC is the ease of construction. To manufacture an ASIC, a very expensive and complicated process is required. In contrast, a PLD can be constructed in a few minutes by a simple tool. There are a number of evolving techniques for PLDs that may overcome some of the disadvantages, both for fuse-linked PLDs and FPGAs.

Generally, in order to program the FPGA, the place-and-route tools provided by the vendor of the FPGA must be used. The place-and-route software normally accepts either a netlist from a synthesis software or the source code from a Hardware Description Language (HDL) that it synthesizes directly. The place-and-route software then outputs digital control parameters in a description file used for programming the FPGA in a programming unit. Similar techniques are used for other PLDs.

When designing integrated circuits, it is common practice to design the circuitry as state machines since they provide a framework that simplifies construction of the hardware. State machines are especially useful when implementing complicated flows of data, where data will flow through logic operations in various patterns depending on prior calculations.

State machines also allow re-use of hardware elements, thus optimizing the physical size of the circuit. This allows integrated circuits to be manufactured at lower cost.

Previous constructions of data flow machines using specialized hardware have been based on connecting state machines or specialized CPUs to each other. A CPU is a special case of a state machine. These are often connected with specialized routing logic and, in some cases, specialized memories. More specifically, in earlier designs of data flow machines, state machines have been used for emulating the behaviour of the data flow machine. Moreover, earlier data flow machines have commonly also been in the form of dynamic data flow machines, so specialized token matching and re-ordering components are often used.

US 5,021,947 discloses a multi-processing system according to the above, which emulates a data flow machine by arranging up to 512 processing elements (PE) in a three-dimensional structure. Each PE constitutes a complete VLSI-implemented computer with its own CPU and local memory for program and data storage. Data is transferred between the different PEs in form of data packets which contain both data to be processed as well as an address identifying the destination PE and an address identifying an actor within the PE. Moreover, the communication network interconnecting the PEs is designed to be reliable, with automatic retry on garbled messages, distributed bus arbitration, alternate-path packet routing etc. Additionally, the modular nature of the computer allows adding more processing elements to meet a range of throughput and reliability requirements.

Consequently, the structure of the emulated data flow machine according to US 5,021,947 is very complex and does not fully utilize the data flow structure already presented in the data flow graph. Also, the monitoring of packets being transferred back and forth in the machine implies the addition of much extra logic circuitry.

The document "Conditional and Iterative Structures Using a Homogeneous Data Flow Graph Model" by Verdoscia et al. also discloses a data flow machine comprising a set of processors arranged for obtaining a homogeneous flow of data. The data flow machine is realized in an apparatus called "Alfa" which is disclosed in the document "Actor Hardware Design for Static Dataflow Model" by the same authors. However, the machine disclosed by these documents is not optimized in regard to the structure of an earlier established data flow graph, i.e. many steps are performed after establishing the data flow graph, which steps makes the machine suitable for implementation by use of hardware units in form of computers or statemachines. Consequently, the machine disclosed by these documents facilitates a homogenous flow of data through a set of identical hardware units (computers), but does not disclose how to implement the data flow graph in hardware in an optimum way as regards computational efficiency.

By building a super-computer with large numbers of processors in the form of a data flow machine, the hope has been to achieve a high degree of parallelism. Attempts have been made where the processors either consisted of many CPUs or many ASICs, each comprising many state machines. Since designs of earlier data flow machines have included the use of state machines (usually in the form of processors) in ASICs, the most straightforward method to implement data flow machines in programmable logical devices like FPGA would also be to use state machines. A general feature for all previously known data flow machines is that the nodes of an established data flow graph do not correspond to specific hardware units (commonly known as functional units, FU) in the final hardware implementation. Instead, hardware units that happens to be available at a specific time instant are used for performing calculations specified by the nodes affected in the data flow graph. If a specific node in the data flow graph is to be performed more than once, different functional units may be used every time the node is performed.

Further, previous data flow machines have all been implemented by the use of state machines or processors to perform the function of the data flow machine. Each state machine is capable of performing the function of any node in the data flow graph. This is required to enable each node to be performed in any functional unit. Since each state machine is capable of performing any node's function, the hardware required for any other node apart from the currently executing node will be dormant. It should be noted that the state machines (sometimes with supporting hardware for token manipulation) are the realization of the data flow machine itself. It is not the case that the data flow machine is implemented by some other means, and happens to contain state machines in its functional nodes.

Most programming languages used today are so-called imperative languages, e.g. languages such as Java, Fortran, and Basic. These languages are almost impossible, or at least very hard, to re-write as data flows without loosing parallelism.

Instead, the use of functional languages rather than imperative languages simplifies the design of data flow machines. Functional languages are characterized in that they exhibit a feature called referential transparency. This means that only the meaning or value of immediate component expressions is significant in determining the meaning of a larger compound expression. Since expressions are equal if and only if they have the same meaning, referential transparency means that equal sub-expressions can be interchanged in the context of a larger expression to give equal results.

If execution of an operation has effects besides providing output data (e.g. a read-out on a display during execution of the operation) it is not referentially transparent since the result from executing the operation is not the same as the result without execution of the operation. All communication to or from a program written in a referentially transparent language is called side-effects (e.g. memory accesses, read-outs, etc).

Though the design of hardware in a high-level language is desirable in general, there are special advantages in the case of an FPGA. Since FPGAs are reconfigurable, a single FPGA can accept many different hardware designs. To fully utilize this ability, a much easier way of specifying designs than traditional hardware description languages is necessary. For an FPGA, the benefits of a high-level language might even outweigh a cost in efficiency of the finished design, something which would not be true for the design of an ASIC.

WO 0159593 discloses the compilation of a high-level software-based description of an algorithm into digital hardware implementations. The semantics of the programming language is interpreted through the use of a compilation tool that analyzes the software description to generate a control and data flow graph. This graph is then the intermediate format used for optimizations, transformations and annotations. The resulting graph is then translated to either a register transfer level or a netlist-level description of the hardware implementation. A separate control path is utilized for determining when a node in the flow graph shall transfer data to an adjacent node. Parallel processing may be achieved by splitting the control path and the data path. By using the control path, "wavefront processing" may be achieved, which means that data flows through the actual hardware implementation as a wavefront controlled by the control path.

The use of a control path implies that only parts of the hardware may be used while performing data processing. The rest of the circuitry is waiting for the first wavefront to pass through the flow graph, so that the control path may launch a new wavefront.

US 6145073 discloses pre-designed and verified data-driven hardware cores, which are assembled to generate large systems on a single chip. Tokens are synchronously transferred between cores over dedicated connections by means of a one-bit ready signal and a one-bit request signal. The ready-request signal handshake is necessary and sufficient for token transfer. Also, each of the connected cores has to be of at least finite state machine complexity. Finally there is no concept of a general firing mechanism, so no conditional re-direction of the flow of data can be performed. Thus, no data flow machine could be built with this system. Rather, the protocol for exchange of data between cores focuses on keeping pipelines within the cores full.

The document "Application-Specific Hardware: Computing Without CPUs" by Mihai Budiu discloses an architecture for general purpose computing which combines reconfigurable hardware and compiler technology for producing Application-Specific Hardware. Each static program instruction is represented by a dedicated hardware implementation. The program is decomposed into small fragments called Split-phase Abstract Machines (SAM) which are synthesized in hardware as state machines and combined by means of an interconnecting network. During execution of the program, the SAMs can be in one of three states: inactive, active or passive. Tokens are passed between different SAMs, which tokens enables the SAMs to start execution. This implies that only a few SAMs at a time may perform actual data processing, the rest of the SAMs are waiting for the token to enable execution. By this procedure low power consumption is achieved, but at the same time the computational capacity is reduced.

Summary of the Invention

The present invention seeks to provide a method for improving the performance of a data processing system.

More specifically, an object of the present invention is to increase the computational capability of a system by implementing a data flow machine in hardware, wherein massive parallelism is obtained.

Another object of the present invention is to improve the utilization the available hardware resources, i.e. a larger portion of the available logic circuitry (gates, switches etc) may be used simultaneously.

This object has been achieved by a method for generating descriptions of digital logic from high-level source code specifications, wherein at least part of the source code specification is compiled into a multiple directed graph representation comprising functional nodes with at least one input or one output, and connections indicating the interconnections between the functional nodes. Moreover, hardware elements are defined for each functional node of the graph, wherein the hardware elements represent the functions defined by the functional nodes. Additional hardware elements are defined for each connection between the functional nodes, wherein the additional hardware elements represent transfer of data from a first functional node to a second functional node. Finally, a firing rule for each of the functional nodes of the graph are defined, wherein said firing rule defines a condition for the functional node to provide data at its output and to consume data at its input.

Also, an object of the present invention is to overcome the limitations in computational efficiency, which are present in the prior art data flow machines due to the use of a dedicated control path for enabling flow of data between different functional units. Additionally, the hardware implementation according to the present invention enables increased computational capacity compared to the prior art solutions as a consequence of efficient data storage in the data flow machine without the need for intense communication with an external memory.

The present invention does hence implement the function described by a data flow graph in hardware in an efficient way without the need for specialized interconnected CPUs or advanced data exchange protocols. The present invention makes full use of the similarities in semantics between data flow machines and RTL (Register Transfer Level) logic in that combinatorial logic is used instead of CPUs and that hardware registers are used instead of RAMs (Random Access Memory), backplanes, or Ethernet networks.

A further object of the present invention is to enable design of silicon hardware from high level programming language descriptions. A high level programming language is a programming language that focuses on the description of algorithms in themselves, rather than on implementation of an algorithm in a specific type of hardware. With a high level programming language and the capability to automatically design integrated circuit descriptions from programs written in the language, it becomes possible to use software engineering techniques for the design of integrated circuits. This is especially advantageous for FPGAs and other re-configurable PLDs that can be re-configured with many different hardware designs at little or no cost.

Apart from benefiting from many different, easily created hardware designs, FPGAs and other PLDs can have an efficiency benefit from automated design of hardware descriptions from high-level languages. If the system can exploit a large amount of parallelism it is capable of filling as large a part of the PLD as possible with meaningful operations, giving very high performance. This is in contrast to traditional hardware design which usually focuses on creating as small designs as possible.

According to the invention a method of generating digital control parameters for implementing digital logic circuitry from a graph representation comprising functional nodes is provided, said functional nodes comprising at least one input or at least one output, and connections indicating the interconnections between the functional nodes. The method comprises defining digital control parameters specifying a merged hardware element for at least a first and a second functional node, said digital control parameters specifying the merged hardware element to perform the function of both the first and second functional node, and defining digital control parameters specifying a firing rule for the hardware element resulting from the merge of the first and second functional node.

The generated digital control parameters may specify a direct connection between the at least one output of the first functional node and the at least one input of the second functional node.

The method may comprise defining digital control parameters specifying a firing rule for the merged hardware element which is different from the firing rules of the first and second functional nodes.

The graph representation may be generated from high-level source code specifications.

According to the invention an apparatus for generating digital control parameters for implementing digital logic circuitry from a graph representation comprising functional nodes is provided, said functional nodes comprising at least one input or at least one output, and connections indicating the interconnections between the functional nodes. The apparatus is adapted to define digital control parameters specifying a merged hardware element for at least a first and a second functional node, said digital control parameters specifying the merged hardware element to perform the function of both the first and second functional node, and define digital control parameters specifying a firing rule for the hardware element resulting from the merge of the first and second functional node.

The apparatus may be adapted to define digital control parameters which specify a direct connection between the at least one output of the first functional node and the at least one input of the second functional node.

The apparatus may be adapted to define digital control parameters specifying a firing rule in the merged hardware element which is different from the firing rules of the first and second functional nodes.

According to the invention a computer program product is provided, which is directly loadable into the memory of an electronic device having digital computer capabilities, comprising software code portions for generating digital control parameters for implementing digital logic circuitry from a graph representation comprising functional nodes, said functional nodes comprising at least one input or at least one output, and connections indicating the interconnections between the functional nodes, defining digital control parameters specifying a merged hardware element for at least a first and a second functional node, said digital control parameters specifying the merged hardware element to perform the function of both the first and second functional node, and defining digital control parameters specifying a firing rule for the hardware element resulting from the merge of the first and second functional node. when said product is run by said electronic device.

The computer program product may be embodied on a computer-readable medium.

According to the invention a method of enabling activation of a first and second interconnected hardware elements in a data flow machine is provided, said method comprising providing the first hardware element with a first digital data element, wherein the provision of first digital data element in the first hardware element enables activation of the first hardware element, transferring the first digital data element from the first hardware element to the second hardware element, wherein the reception of the first digital data element in the second hardware element enables activation of the second hardware element, and the surrender of the first digital data element from the first hardware element disables activation the first hardware element.

The first hardware element may be provided with a second digital data element after the surrender of the first digital data element.

The digital data element may be generated in the first hardware element.

The digital data element may be generated in a separate hardware element and transferred to the first hardware element.

The digital data element may be surrendered from the second hardware element and returned to the first hardware element.

According to the invention a data flow machine comprising a first and a second interconnected hardware elements is provided, wherein the first hardware element is provided with a first digital data element, and adapted to be enabled for activation as long as said first digital data element is present in the first hardware element, and the first hardware element is adapted to transfer the first digital data element from the first hardware element to the second hardware element, wherein the second hardware element is adapted to be enabled for activation as a result of the reception of the at least first digital data element, and the first hardware element is adapted to be disabled for activation as a result of the surrender of the digital data element.

The first hardware element may be adapted to be provided with a second digital data element after the transfer of the first digital data element to the second hardware element.

The first hardware element may be adapted to generate the digital data element.

The first hardware element may be adapted to receive the digital data element from a separate hardware element.

The digital data element may be surrendered from the second hardware element and returned to the first hardware element.

The data flow machine may be implemented by means of an ASIC, FPGA, CPLD or other PLD.

According to the invention a method of ensuring data integrity in a data flow machine is provided, wherein at least one stall line, which is connected to at least a first and a second hardware elements being arranged so that a data path is provided in the data flow machine, is provided for suspending flow of data, which progresses in the data path from the first hardware element to the second hardware element during a processing cycle, when a stall signal is active on the stall line. The method comprises receiving the stall signal from the second hardware element at a first input of a first on-chip memory element, receiving data from the first hardware element at a first input of a second on-chip memory element, buffering the received data and the received stall signal in the first and second on-chip memory element for at least one processing cycle, providing the buffered stall signal to the first hardware element at a first output of the first on-chip memory element, and providing the buffered data to the second hardware element at a first output of the second on-chip memory element.

According to the invention an apparatus for ensuring data integrity in a data flow machine is provided, wherein at least one stall line, which is connected to at least a first and a second hardware elements being arranged so that a data path is provided in the data flow machine, is provided for suspending flow of data, which progresses in the data path from the first hardware element to the second hardware element during a processing cycle, when a stall signal is active on the stall line. The apparatus may be adapted to receive the stall signal from the second hardware element at a first input of a first on-chip memory element, receive data from the first hardware element at a first input of a second on-chip memory element, buffer the received data and the received stall signal in the first and second on-chip memory element for at least one processing cycle, provide the buffered stall signal to the first hardware element at a first output of the first on-chip memory element, and provide the buffered data to the second hardware element at a first output of the second on-chip memory element.

According to the invention a method of generating digital control parameters for implementing digital logic circuitry from a graph representation comprising functional nodes with at least one input or at least one output, and connections indicating the interconnections between the functional nodes is provided. The method comprises defining digital control parameters specifying at least a first set of hardware elements for the functional nodes or the connections between the functional node, and defining digital control parameters specifying at least one re-ordering hardware element that orders data elements emitted from at least one first set of hardware elements so that data elements are emitted from the first set of hardware elements in the same order as they enter the first set of hardware elements.

The method may comprise defining digital control parameters specifying on-chip memory elements that may be independently accessed in parallel for at least one connection between the functional nodes.

The method may comprise defining digital control parameters specifying digital registers for at least one connection between the functional nodes

The method may comprise defining digital control parameters specifying at least one flip/flop for at least one connection between the functional nodes.

The method may comprise defining digital control parameters specifying at least one latch for at least one connection between the functional nodes.

According to the invention a computer program product is provided, which is directly loadable into the memory of an electronic device having digital computer capabilities, comprising software code portions for generating digital control parameters for implementing digital logic circuitry from a graph representation comprising functional nodes with at least one input or at least one output, and connections indicating the interconnections between the functional nodes is provided. The method comprises defining digital control parameters specifying at least a first set of hardware elements for the functional nodes or the connections between the functional node, and defining digital control parameters specifying at least one re-ordering hardware element that orders data elements emitted from at least one first set of hardware elements so that data elements are emitted from the first set of hardware elements in the same order as they enter the first set of hardware elements when said product is run by said electronic device.

According to the invention an apparatus is provided for generating digital control parameters for implementing digital logic circuitry from a graph representation comprising functional nodes with at least one input or at least one output, and connections indicating the interconnections between the functional nodes. The apparatus is adapted to define digital control parameters specifying at least a first set of hardware elements for the functional nodes or the connections between the functional node, and define digital control parameters specifying at least one re-ordering hardware element that orders data elements emitted from at least one first set of hardware elements so that data elements are emitted from the first set of hardware elements in the same order as they enter the first set of hardware elements.

According to the invention a data flow machine is provided. The data flow machine comprises a first set of hardware elements performing data transformation, and at least one re-ordering hardware element that orders data elements emitted from at least one first set of hardware elements so that data elements are emitted from the first set of hardware elements in the same order as they enter the first set of hardware elements.

Other objects, features and advantages of the present invention will appear more clearly from the following detailed disclosure of a preferred embodiment.

Brief Description of the Drawings

A preferred embodiment of the present invention will now be described with reference to the accompanying drawings, in which:

FIG. 1a is a schematic view illustrating a first data flow graph known per se,
FIG 1b is a schematic view illustrating a second data flow graph known per se,
FIG 2 illustrates a first embodiment of the present invention.
FIG 3 illustrates a second embodiment of the present invention wherein the lengths of different data paths have been equalized.
FIG 4a is a detailed schematic view of a node according to a third embodiment of the present invention.
FIG 4b illustrates an example of the logic circuitry for establishing a firing rule.
FIG 4c correspondingly illustrates an example of the logic circuitry used in the registers between the nodes in the data flow machine.
FIG 5a illustrates a third embodiment of the present invention wherein the lengths of different data paths have been equalized by means of node merging.
FIG 5b is a more detailed illustration of the merging of two nodes in FIG 5a
FIG 6 illustrates an embodiment of a stall cutter according to the present invention.

Detailed Disclosure of the Invention

Generally, the transformation of a source-code program into a data flow graph is done by data flow analysis. A simple method for performing data flow analysis is this: Start at all the outputs of the program. Find the immediate source of each output. If it is an operation, replace the operation with a node and join it to the output with an arc. If the source is a variable, replace the variable with an arc and connect it to the output. Repeat for all arcs and nodes that lack fully specified inputs.

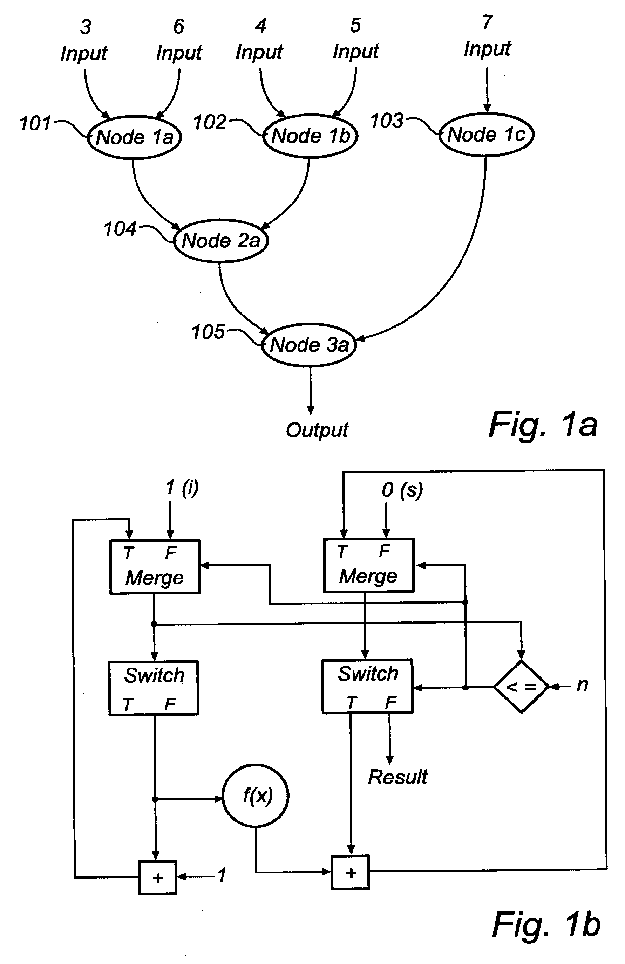

FIG. 1a illustrates a data flow graph known per se. For reasons of clarity, throughout this text the term node will be used to indicate a functional node in the data flow graph. Three processing levels are shown in the figure: the top nodes 101, 102, 103 receives input data from one or more sources at their inputs, which data are to be processed as it flows through the graph. The actual mathematical, logical or procedural function performed by the top nodes is specific for each implementation, as it depends on the source code, from which the data flow graph originates. For example, the first node 101 may perform a simple a addition of data from the two inputs, the second node 102 may perform a subtraction of data received at the first input from data received at the second input, and the third node 103 may e.g. perform a fixed multiplication by two of data received at its input. The number of inputs for each node, the actual processing performed in each node, etc may of course be different for different implementations and are not limited by the example above. A node may, for example, perform more complex calculations or even access external memories, which will be described below.

Data is flowing from the first node level to the second node level, where in this case data from nodes 101 and 102 are transferred from the outputs of nodes 101 and 102 to the inputs of node 104. In accordance with the discussion above, node 104 performs a specific task based on the information received at its inputs.

After processing in the second level, data is transferred from the output of node 104 to a first input of node 105, which node is located in the third level. As can be seen from figure 1, data from the output of node 103 in level 1 is received at a second input of node 105. The fact that no second-level node is present between node 103 and 105 implies that data from node 103 will be available at the second input of node 105 before data are available at the first input node of node 105 (assuming equal combinatorial delay at each node). In order to handle this situation efficiently, each node will be provided with a firing rule which defines a condition for the node to provide data at its output.

More specifically, firing rules are the mechanisms that control the flow of data in the data flow graph. By the use of firing rules, data are transferred from the inputs to the outputs of a node while the data are transformed according to the function of the node. Consumption of data from an input of a node may occur only if there really are data available at that input. Correspondingly, data may only be produced at an output if there are no data from a previous calculation blocking the path (i.e. a subsequent node must have consumed the previous data item). At some instances it is, however, possible to produce data at an output even though old data block the path; the old data at the output will then be replaced with the new data.

A specification for a general firing rule normally comprises:

1) the conditions for each input of the node in order for the node to consume the input data,
2) the conditions for each output of the node in order for the node to produce data at the output, and
3) the conditions for executing the function of the node.

The conditions normally depend on the values of input data, existence of valid data at inputs or outputs, the result of the function applied to the inputs or the state of the function, but may in principle depend on any data available to the system.

By establishing general firing rules for the nodes 101-105 of the system, it is possible to control various types of programs without the need of a dedicated control path. However, by means of firing rules it is possible, for some special cases, to implement a control flow. Another special case is a system without firing rules, wherein all nodes 101-105 operates only when data are available at all the inputs of the nodes 101-105.

A specific example of the functioning of firing rules can be given through the merge node. By this node it is possible to control the flow of data without the need of a control flow. The merge node normally has two data inputs from one of which data will be selected. Moreover, it also has a control input which is used for selecting which data input to fetch data from. Finally it has one data output at which the selected input data value is delivered.

For example, lets assume that the node has two inputs, T and F. The condition controlling the node is received on an input C and the result is provided at the output R. The firing rule below will produce data at the output of the node even if there are only data available at one input. In this case, if e.g. C=1, no data need to be present at the input F. That is, the condition for consuming data at the inputs of the node is:

$$(C=1 \ AND \ T=x) \ OR \ (C=0 \ AND \ F=x)$$

where x signifies existence of a valid value.

Moreover, the condition for providing data at the output of the node is:

$$(C=1 \ AND \ T=x) \ OR \ (C=0 \ AND \ F=x)$$

and the function of the node is:

$$R \ = \ IF \ (C==1) \ T \ ELSE \ F$$

Another type of node for controlling the data flow is the switch. The switch node normally has two outputs, T and F, one data input D, and one control input C. The node will provide data at one of its outputs when data is available at the data input and the control input. The condition for consuming data from the inputs is:

$$C=x \ AND \ D=x$$

and the condition for providing data at the outputs is:

$$T: \ C=1 \ AND \ D=x$$

$$F: \ C=0 \ AND \ D=x$$

and the function of the node is:

$$T \ = \ IF \ (C==1) \ D$$

$$F = IF (C==0) D$$

Figure 1b illustrates the use of the merge and switch nodes for controlling the flow of data in a data flow machine. In this case the data flow machine calculates the value of s according to the function:

$$s = \sum_{i=1}^{n} f(x_i)$$

Following the reasoning above, it is possible to establish firing rules for all kinds of possible nodes, e.g. True-gates (one data input D, one control input C, one output R, and function R = IF (C==1) D); Nondeterministic priority-merge (two data inputs D1 and D2, one output R, and function R = IF (D1) D1 ELSE IF (D2) D2); Addition (two data inputs D1 and D2, one output R, and function R = D1 + D2); Dup (one data input D, one control input C, one output R and function R = D); and Boolstream (no inputs, one output R, and function:

$$R = IF (state==n) set state=0, return 1$$

ELSE increment state, return 0

However, independently of the function of the node, after processing the data at its inputs, node 105 provides the final value of the data processing at its output. In this case data at the five inputs have produced data at a single output.

When examining the semantics of a data flow machine closely, one can make the observation that those semantics are very similar to the way digital circuitry operates, especially at the register transfer level (RTL). In a data flow machine, data resides on arcs and is passed from one arc to another by means of a functional node that performs some operation on the data. In digital circuitry, data resides in registers and is passed between registers by means of combinatorial logic that perform some function on the data. Since such a close similarity exists between the semantics of the data flow machine and the operation of digital circuitry, it is possible to implement the data flow machine directly in the digital circuitry. This means that the propagation of data through data flow machines can be implemented in digital circuitry without the need for simulation devices like state machines to perform the actions of the data flow machine. Instead, the data flow machine can be implemented directly by replacing nodes with combinatorial logic and arcs with registers or other fast memory elements that may be independently accessed in parallel.

The advantage of this is primarily execution speed. Such an implementation will be able to utilize a higher level of parallelism than an implementation through processors or other state machines. It is easier to pipeline, and the level of parallelism can have a finer granularity. It should be noted that avoiding the use of state-machines for implementing the data flow machine itself still permits the nodes of the data flow machine to contain state-machines.

An alternative description of the invention would be that special register-nodes are inserted between the functional nodes of the data flow graph and the edges are implemented as simple wires. For the sake of clarity, we describe the invention in terms of nodes as combinatory logic and edges as registers, rather than using functional nodes, register nodes and edges.

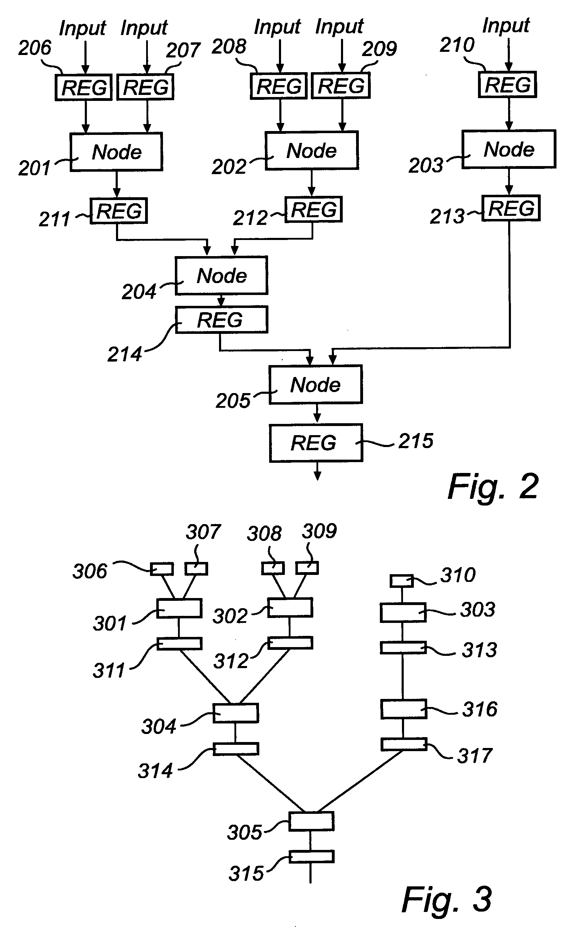

Figure 2 illustrates a first simple embodiment of the present invention. More specifically, the figure schematically illustrates a hardware implementation of the data flow graph of figure 1. The functional nodes 101-105 of figure 1 has been replaced by nodes 201-205 which performs the mathematical or logical functions defined in the data flow graph of figure 1. This function could be performed by combinatorial logic, but also for example by a state machine or some pipelined device.

In figure 2, wires and fast parallel data-storing hardware, such as registers 206-215 or flip-flops have replaced the connections between the different nodes of figure 1. Data that are provided at the output of a node 201-205 is stored in a register 206--215 for immediate or subsequent transfer to another node 201-205. As is understood from the figure, register 213 makes it possible to store the output value from node 203 while data from nodes 201 and 202 are processed in node 204. In case there were no registers 206-215 available between the different nodes 201-205, data at the inputs of some nodes may be unstable (change value) due to different combinatorial delays in previous nodes in the same path.

For example, lets assume that a first set of data has been provided at the inputs of nodes 201-203 (via registers 206-210). After processing in the nodes, data will be available at the outputs of the nodes 201-203. Nodes 201 and 202 will then provide data to node 204 while node 203 will provide data to node 205. Since node 205 also receives data from node 204, data must be processed in node 204 before being transferred to node 205. If new data is provided at the inputs of nodes 201-203 before data has propagated through node 204, the output of node 203 may have changed. Hence, data at the input of node 205 will no longer be correct, i.e. data provided by node 204 is from an earlier instant compared to data provided by node 205.

The reasoning above is a simplified reasoning. In practice advanced clocking schemes, communication protocols, additional nodes/registers, or additional logic circuits are necessary in order to guarantee that data provided to the different nodes are correct. The most straightforward solution to the problem is shown in figure 3, where an additional node 316 and its associated register 317 have been inserted into the data path. The node 316 performs a NOP (No Operation) and is consequently not altering the data provided at its input. By inserting the node 316, the same length is obtained in every data path of the graph. The effect is that the arc between 203 and 205 can now hold two elements.

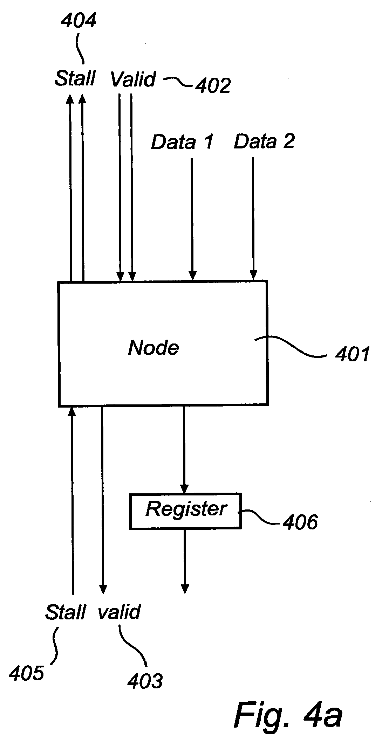

Another approach is illustrated in figure 4a, where each node 401 is provided with additional signal lines for providing correct data at every time instant. The first additional lines carries "valid" signals 402 which indicates that previous nodes have stable data at their outputs. Similarly, the node 401 provides a "valid" signal 403 to a subsequent node in the data path when the data at the output of node 401 is stable. By this procedure, each node is able to determine the status of the data at its inputs.

Moreover, second additional lines carries a "stall" signal 404 which indicates to a previous node that the current node 401 is not prepared to receive any additional data at its inputs. Similarly, the node 401 also receives a "stall" line 405 from a subsequent node in the data path. By the use of stall lines it is possible to temporarily stop the flow of data in a specific path. This is important in case a node at some time instances performs time-consuming data processing with indeterminate delay, such as loops or memory accesses. The use of a stall signal is merely one embodiment of the current invention. Several other signals could be used, depending on the protocol chosen. Examples include "data consumed", "ready-to-receive", "acknowledge" or "not-acknowledge"-signals, and signals based on pulses or transitions rather than a high or low signal. Other signaling schemes are also possible. The use of a "valid" signal makes it possible to represent the existence or non-existence of data on an arc. Thus not only synchronous data flow machines are possible to construct, but also static and dynamic data flow machines. The "valid" signal does not necessarily have to be implemented as a dedicated signal-line, it could be implemented in several other ways too, like choosing a special data value to represent a "null"-value. As for the stall signal, there are many other possible signaling schemes. For clarity, the rest of this document will only refer to stall and valid signals. It is simple to extend the function of the invention to other signaling schemes.

With the existence of a specific stall signal, it is possible to achieve higher efficiency. The stall signal makes it possible for a node to know that even if the arc below is full at the moment, it will be able to accept an output token at the next clock cycle. Without a stall signal, the node has to wait until there is no valid data on the arc below before it can fire. That means that an arc will be empty at least every other cycle, thus loosing efficiency.

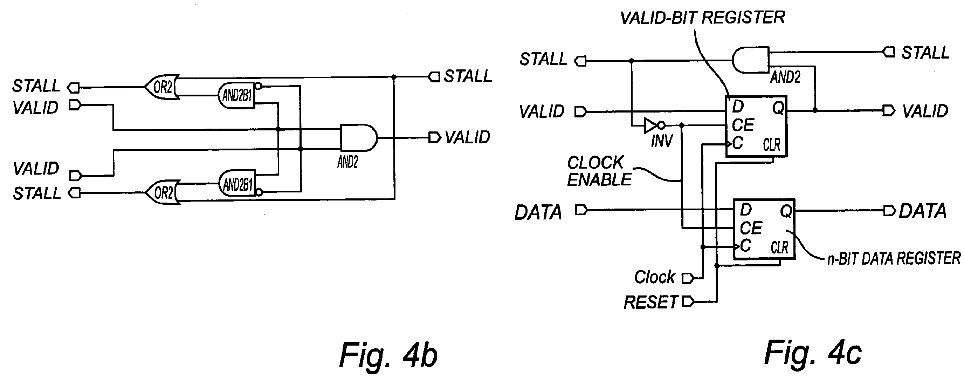

Figure 4b illustrates an example of the logic circuitry for producing the valid 402, 403 and stall 404, 405 signals for a node 401. The circuitry shown in this figure is used in nodes which fires when data is available on all inputs. Generally, the firing rule may be more complex and has to be established in accordance with the function of the individual node 401.

Figure 4c correspondingly illustrates an example of the logic circuitry used in the registers 406 between the nodes in the data flow machine. This circuitry ensures that the register will retain its data if the destination node is not prepared to accept the data yet, and signal this to the source node. It will also accept new data if the register is empty, or if the destination node is about to accept the current contents of the register. In this figure only one data input 407 and one data output 408 is illustrated for reasons of clarity. However, it is emphasized that the actual number of inputs and outputs depend on bus width of the system (i.e. how many bits wide the token is).

In case of a complex data flow machine, the stall lines may become very long compared to the signal propagation speed. This may result in that the stall signals do not reach every node in the path that needs to be stalled, with loss of data as result (i.e. data which have not yet been processed are written over by new data).

There are two common methods for solving this situation. Either the stall signal propagation path is very carefully balanced to ensure that it reaches all target registers in time. Alternatively a fifo-buffer is placed after the stoppable block, completely avoiding the use of a stall signal within the block. Instead the fifo is used to collect the pipeline data as it comes out of the pipeline. The former solution is very difficult and time consuming to implement for large pipelined blocks. The latter requires large buffers that are capable of holding the entire set of data that can potentially exist within the block.

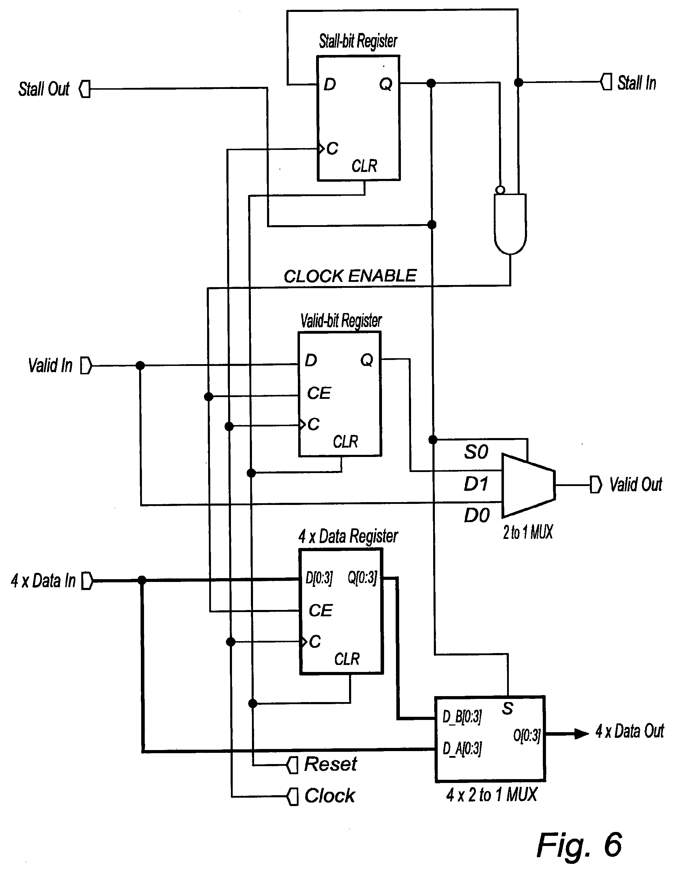

A better way to combat this limited signal propagation speed is by a feature called a "stall cutter" illustrated in figure 6. A stall cutter is basically a register which receives the stall line from a subsequent node and delays it for one cycle. This cuts the combinatorial length of the stall signal at that point. When the stall cutter receives a valid stall signal, it buffers data from the previous node during one processing cycle and at the same time delays the stall signal by the same amount. By delaying the stall signal and buffering the input data, it is ensured that no data are lost even when very long stall lines are used.

The stall cutter can greatly simplify the implementation of data loops, especially pipelined data loops. In this case, many variations of the protocol for controlling the flow of data will call for the stall signal to take the same path as the data through the loop, often in reverse. This will create a combinatorial loop for the stall signal. By placing a stall cutter within the loop, such a combinatorial loop can be avoided, enabling many protocols that would otherwise be hard or impossible to implement.

Finally, a stall cutter is transparent from the point of view of data propagation in the data flow machine. This implies that stall cutters can be added where needed in an automated fashion.

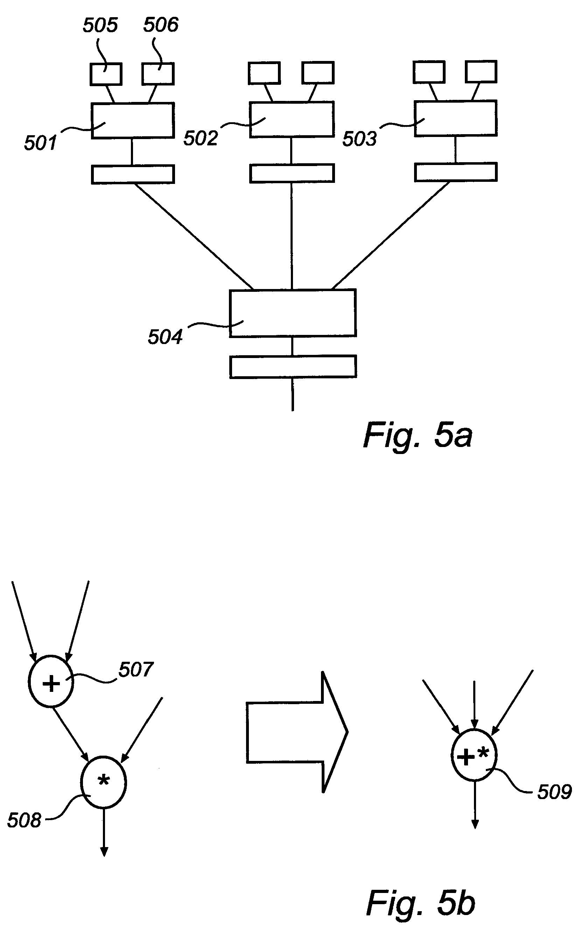

Figure 5a illustrates yet another embodiment of the present invention, wherein the data paths in the graph have been equalized by means of node merging. For designs which utilizes global clock signals, the highest possible clock frequency is determined by the slowest processing unit. This implies that every processing unit with capability to operate at a higher frequency is restricted to operate at the frequency set by the slowest unit. For this reason it is desirable to obtain processing units of equal or nearly equal size, as no unit will slow down the other units. Even for designs without global clock signals it is advantageous that two data paths in a forked calculation have equal lengths, i.e. the number of nodes present in each data path is the same. By ensuring that the data paths are of equal length, the calculations in the two branches will be performed at the same speed.

As is seen in figure 5a, the two nodes 304 and 305 of figure 3 have been merged into one node 504. As discussed above this may be done in order to equalize the lengths of different data paths or for optimizing the overall processing speed of the design.

Node merging is performed by removing the registers between some of the nodes, wherein the number of nodes will be decreased as the merged nodes become bigger. By systematically merging selected nodes, the combinatorial depths of the nodes become substantially equal and the processing speed between different nodes is equalized.

When nodes are merged, their individual functions are also merged. This is done by connecting the different logic elements without any intermediate registers. As the nodes are merged, new firing rules must be determined in order for the nodes to provide data at their outputs when required.

More specifically, as seen in figure 5b, when merging two nodes 507, 508, a new node 509 is created that has the same number of input and output arcs that the original node had, minus the arcs that connected the two nodes 507, 508 that are combined. As mentioned above, for basic function nodes, like add, multiply, etc. the firing rule is to fire when there is data on all inputs, and all outputs are free to receive data (a firing rule called nm-firing rule below). Merging two such nodes 507, 508 will result in a new node 509 with three inputs and a single output. Two inputs from add, two inputs from multiply, and one input that is used in the connection between the two nodes gives three inputs for the merged node. One output from add, one output from multiply and a one output used to connect the two nodes gives a single output from the merged node. The firing rule for the merged node will require data at all its three inputs to fire. In fact, any merge of nodes with the nm-firing rule will itself have an nm-firing rule, though the number of inputs and outputs will have changed. The functions of the original two nodes 507, 508 are merged by directly connecting the output from the first combinatorial block into the input of the other combinatorial block, according to the arc that previously connected them. The register that previously represented the arc between the nodes is removed. Thus, the result is a larger combinatorial block.

Consequently, for nodes that always require data at their inputs and always provide data at their outputs, e.g. nodes that performs arithmetic functions, the firing rules for the merged nodes will be the same as for the original nodes.

As mentioned above, the use of functional programming languages is essential in order to achieve massive parallelism in a data flow machine. According to the present invention, the problem with side-effects is handled by means of tokens. By using special tokens called instance tokens it is possible to control the number of possible accesses to a side-effect as well as the order in which these accesses occur.

Every node which wants to use a side-effect must, besides the ordinary data inputs, have a dedicated data input for the instance token related to the side-effect in question. Besides the data input for the instance token, it must also have an output for the instance token. The data path for the instance token functions as the other data paths in the data flow machine, i.e. the node must have data on all relevant inputs before it can perform its specific operation.

The firing rule for a node that needs access to the side-effect is such that it must have data on its instance token input (i.e. the instance token itself). When the access to the side-effect is completed, the node releases the instance token at its output. This output may in turn be connected to an instance token input of a subsequent node which needs access to the same side-effect. By this procedure, an instance token path is established between all nodes that need access to the specific side-effect. The instance token path decides the order in which the nodes gain access to the side-effect.

Consequently, for a specific side-effect (e.g. a memory or an indicator), there is one or more instance tokens moving along its instance token path. Since all nodes in the chain need to have data on its inputs in order to gain access to the side-effect, it is possible to restrict the number of simultaneous accesses to the side-effect by limiting the number data elements on the instance token data path (i.e. limit the number of instance tokens). If only one instance token is allowed to exist on the instance token path at a specific time instant, it is guaranteed that the side-effect is never accessed from two or more nodes at the same time. Moreover, the order in which the side-effect is accessed is unambiguously determined by the instance token path. If it during certain circumstances is safe to let more than one node gain access to the side-effect, it is possible to introduce more than one instance token in the path at the same time. It may also be safe to split the instance token path, duplicating the instance token to both paths of the split.

For example, when accessing memory as a side-effect, it will usually be safe to split the instance token path if both paths only contain reads from the memory. In that case, simultaneous access to the memory will be arbitrarily arbited by the memory controller, but since the order of executions for reads do not influence one another this is safe. In contrast, if the two paths contained writes, the order in which the two writes were actually performed would be essential, since that would decide what value the memory ultimately holds. In such a case, the instance token path could not be safely split.

Placing several instance tokens after each other on a single thread of instance token path would usually represent access to the memory by different "generations" of a pipelined calculation. It will be safe to insert multiple instance tokens after each other, if, for example, it is known that the two generations are unrelated in that they do not access the same parts of the memory.

It is also possible to place accesses to several different side-effects (such as memories or other input or output units) after each other. This will have the effect of unambiguously determining the order of access to each side-effect for each instance token on the path. For example, read from an input unit can be placed before write to an output unit on an instance token path, If several instance tokens exist on the path at the same time, the overall order for reads and writes might be undetermined, but for each individual instance token on the path there will be a clear ordering between side-effects.

Finally, when designing a digital circuit, different types of data flow machines can be mixed. For example a loop with a data-dependent number of iterations can be made as a section of dynamic data flow machine in an otherwise static data flow machine. That way the iteration may be executed in parallel, something that a static data flow machine can not do. Such a local dynamic portion of a static data flow machine can operate without the full tag-matching system of the dynamic data flow machine. Instead one only needs to ensure that tokens exit the dynamic portion in the same order as they entered it. Since the rest of the machine is static and does not re-order tokens, this will make tokens match.

It is possible to rearrange the tokens in correct order after the recursion is finished by tagging each token that enters the recursion with a serial number, and using a buffer for collecting tokens that are finishing the recursion out of order. More specifically, a buffer is arranged after the recursion step. If a token exits the recursion out of order, it will be placed in the buffer until all tokens with a lower serial number exit the recursion. Consequently, the size of the buffer determines how many tokens may exit the recursion out of order, while ensuring that the tokens can be correctly arranged after the completion of the recursion. In certain cases it can be known that the order of tokens exiting the recursion is irrelevant, for example if a simple summation of the values of the tokens that exit the recursion is to be performed. In such cases both the tagging of the data tokens with a serial number and the buffer may be omitted.

Apart from the data-dependent loop, the use of a local tag-matching and re-ordering scheme can also be used for other types of re-ordering nodes or sub-graphs.

The present invention has been described above with reference to a preferred embodiment. However, other embodiments than the one disclosed herein are possible within the scope of the invention, as defined by the appended claims.

**Claims**

1. A method of generating digital control parameters for implementing digital logic circuitry forming a data flow machine from a graph representation comprising functional nodes (101-105) with at least one input or at least one output, and connections indicating the interconnections between the functional nodes (101-105),
   generating digital control parameters specifying a first set of hardware elements (201-205) to perform the functions of said functional nodes of the graph (101-105),
   generating digital control parameters specifying a second set of hardware elements (206-215), which hardware elements are specified to enable data transfer between the hardware elements of said first set of hardware elements (201-205) according to the connections between the functional nodes (101-105), and
   generating digital control parameters specifying electronic circuitry to perform a firing rule for at least one hardware element of said first set of hardware elements (201-205), **characterized in that**
   said electronic circuitry performing the firing rule has a control input.

2. The method according to claim 1, **characterized in that**
   the graph representation is a directed graph.

3. The method according to claim 1 or 2, **characterized in that**
   the graph representation is generated from high-level source code specifications.

4. The method according to claim 1-3, **characterized by**
generating digital control parameters specifying memory elements that may be independently accessed in parallel for at least one connection between the functional nodes.

5. The method according to claim 1-4, **characterized by**
generating digital control parameters specifying digital registers, at least one flip/flop and/or at least one latch for at least one connection between the functional nodes

6. The method according to any preceding claim, **characterized by**
generating digital control parameters specifying combinatorial logic for at least one functional node.

7. The method according to claim 1-5, **characterized by**
generating digital control parameters specifying at least one state machine for at least one functional node.

8. The method according to claim 1-5, **characterized by**
generating digital control parameters specifying at least one pipelined device for at least one functional node.

9. An apparatus for generating digital control parameters for implementing digital logic circuitry from a graph representation comprising functional nodes (101-105) with at least one input or at least one output, and connections indicating the interconnections between the functional nodes (101-105), wherein the apparatus is adapted to
generating digital control parameters specifying a first set of hardware elements (201-205) to perform the functions of said functional nodes of the graph (101-105),
generating digital control parameters specifying a second set of hardware elements (206-215), which hardware elements (206-215) are specified to enable data transfer between the hardware elements of said first set of hardware elements (201-205) according to the connections between the functional nodes (101-105), and
generating digital control parameters specifying electronic circuitry to perform a firing rule for at least one hardware element of said first set of hardware elements (201-205), **characterized in that**
said electronic circuitry performing the firing rule has a control input.

10. The apparatus according to claim 9, **characterized in that**
the graph representation is a directed graph.

11. The apparatus according to claim 9 or 10, **characterized in that**
the graph representation is generated from high-level source code specifications.

12. The apparatus according to claim 9-11, **characterized in that** the apparatus is adapted to
generate digital control parameters specifying memory elements that may be independently accessed in parallel for at least one connection between the functional nodes.

13. The apparatus according to claim 9-12, **characterized in that** the apparatus is adapted to
generate digital control parameters specifying digital registers, at least one flip/flop and/or at least one latch for at least one connection between the functional nodes.

14. The apparatus according to claims 9-13, **characterized in that** the apparatus is adapted to
generate digital control parameters specifying combinatorial logic for at least one functional node.

15. The apparatus according to claims 9-13, **characterized in that** the apparatus is adapted to
generate digital control parameters specifying at least one state machine for at least one functional node.

16. The apparatus according to claim 9-13, **characterized in that** the apparatus is adapted to
generate digital control parameters specifying at least one pipelined device for at least one functional node.

17. A data flow machine generated by the apparatus of one of claims 9-16 comprising
a first set of hardware elements (201-205) which are adapted to perform data transformation,
a second set of hardware elements (206-215) which interconnects the first set of hardware elements (201-205), and
electronic circuitry which establishes at least one firing rule for each of the first set of hardware elements (201-205),
**characterized in that**
said electronic circuitry establishing the firing rule has a control input.

18. The data flow machine according to claim 17, **characterized in that**
at least one element of the second set of hardware elements is in form of memory elements that may be independently accessed in parallel.

19. The data flow machine according to claims 17-18, **characterized in that**
at least one element of the second set of hardware elements is in form of a register, a flip/flop or a latch.

20. The data flow machine according to claims 17-19, **characterized in that**
at least one element in the first set of hardware elements is in form of combinatorial logic.

21. The data flow machine according to claims 17-19, **characterized in that**
at least one element in the first set of hardware elements is in form of at least one state machine.

22. The data flow machine according to claims 17-19, **characterized in that**
at least one element in the first set of hardware elements is in form of a pipelined device.

23. The data flow machine according to claims 17-22, **characterized in that**
the data flow machine is implemented by means of an ASIC, FPGA, CPLD or other PLD.

24. A computer program product directly loadable into the memory of an electronic device having digital computer capabilities, comprising software code portions for performing the steps of any of claims 1-8 when said product is run by said electronic device.

25. A computer program product as defined in claim 24, embodied on a computer-readable medium.


**Patentansprüche**

1. Verfahren zum Erzeugen digitaler Steuerungsparameter zum Implementieren digitaler Logikschaltungen, die eine Datenflussmaschine bilden, anhand einer Kurvendiagrammdarstellung, die Funktionsknoten (101-105) umfasst, die mindestens einen Eingang oder mindestens einen Ausgang sowie Verbindungen aufweisen, die die Verbindungen zwischen den Funktionsknoten (101-105) anzeigen, Erzeugen digitaler Steuerungsparameter, die einen ersten Satz Hardware-Elemente (201-205) spezifizieren, um die Funktionen der Funktionsknoten des Kurvendiagramms (101-105) auszuführen, Erzeugen digitaler Steuerungsparameter, die einen zweiten Satz Hardware-Elemente (206-215) spezifizieren, wobei diese Hardware-Elemente spezifiziert sind, um einen Datentransfer zwischen den Hardware-Elementen des ersten Satzes Hardware-Elemente (201-205) gemäß den Verbindungen zwischen den Funktionsknoten (101-105) zu ermöglichen, und
Erzeugen digitaler Steuerungsparameter, die elektronische Schaltungen spezifizieren, um eine formale Regel für mindestens ein Hardware-Element des ersten Satzes Hardware-Elemente (201-205) auszuführen, **dadurch gekennzeichnet, dass**
die elektronischen Schaltungen, die die formale Regel ausführen, einen Steuerungseingang haben.

2. Verfahren nach Anspruch 1, **dadurch gekennzeichnet, dass**
die Kurvendiagrammdarstellung ein gerichtetes Kurvendiagramm ist.

3. Verfahren nach Anspruch 1 oder 2, **dadurch gekennzeichnet, dass** die Kurvendiagrammdarstellung aus höheren Quellcode-Spezifikationen erzeugt wird.

4. Verfahren nach Anspruch 1-3, **gekennzeichnet durch**
Erzeugen digitaler Steuerungsparameter, die Speicherelemente, auf die unabhängig parallel zugegriffen werden kann, für mindestens eine Verbindung zwischen den Funktionsknoten spezifizieren.

5. Verfahren nach Anspruch 1-4, **gekennzeichnet durch**
Erzeugen digitaler Steuerungsparameter, die digitale Register, mindestens einen Flipflop und/oder mindestens einen Pufferspeicher für mindestens eine Verbindung zwischen den Funktionsknoten spezifizieren.

6. Verfahren nach einem der vorausgehenden Ansprüche, **gekennzeichnet durch**
Erzeugen digitaler Steuerungsparameter, die kombinatorische Logik für mindestens einen Funktionsknoten spezifizieren.

7. Verfahren nach Anspruch 1-5, **gekennzeichnet durch**
Erzeugen digitaler Steuerungsparameter, die mindestens eine Zustandsmaschine für mindestens einen Funktionsknoten spezifizieren.

8. Verfahren nach Anspruch 1-5, **gekennzeichnet durch**
Erzeugen digitaler Steuerungsparameter, die mindestens ein Pipeline-Bauelement für mindestens einen Funktionsknoten spezifizieren.

9. Vorrichtung zum Erzeugen digitaler Steuerungsparameter zum Implementieren digitaler Logikschaltungen anhand einer Kurvendiagrammdarstellung, die Funktionsknoten (101-105) umfasst, die mindestens einen Eingang oder mindestens einen Ausgang sowie Verbindungen aufweisen, die die Verbindungen zwischen den Funktionsknoten (101-105) anzeigen, wobei die Vorrichtung für Folgendes ausgelegt ist:

Erzeugen digitaler Steuerungsparameter, die einen ersten Satz Hardware-Elemente (201-205) spezifizieren, um die Funktionen der Funktionsknoten des Kurvendiagramms (101-105) auszuführen,
Erzeugen digitaler Steuerungsparameter, die einen zweiten Satz Hardware-Elemente (206-215) spezifizieren, wobei diese Hardware-Elemente spezifiziert sind, um einen Datentransfer zwischen den Hardware-Elementen des ersten Satzes Hardware-Elemente (201-205) gemäß den Verbindungen zwischen den Funktionsknoten (101-105) zu ermöglichen, und
Erzeugen digitaler Steuerungsparameter, die elektronische Schaltungen spezifizieren, um eine formale Regel für mindestens ein Hardware-Element des ersten Satzes Hardware-Elemente (201-205) auszuführen, **dadurch gekennzeichnet, dass**
die elektronischen Schaltungen, die die formale Regel ausführen, einen Steuerungseingang haben.

10. Vorrichtung nach Anspruch 9, **dadurch gekennzeichnet, dass** die Kurvendiagrammdarstellung ein gerichtetes Kurvendiagramm ist.

11. Vorrichtung nach Anspruch 9 oder 10, **dadurch gekennzeichnet, dass** die Kurvendiagrammdarstellung aus höheren Quellcode-Spezifikationen erzeugt wird.

12. Vorrichtung nach Anspruch 9-11, **dadurch gekennzeichnet, dass** die Vorrichtung für Folgendes ausgelegt ist:

Erzeugen digitaler Steuerungsparameter, die Speicherelemente, auf die unabhängig parallel zugegriffen werden kann, für mindestens eine Verbindung zwischen den Funktionsknoten spezifizieren.

13. Vorrichtung nach Anspruch 9-12, **dadurch gekennzeichnet, dass** die Vorrichtung für Folgendes ausgelegt ist:

Erzeugen digitaler Steuerungsparameter, die digitale Register, mindestens einen Flipflop und/oder mindestens einen Pufferspeicher für mindestens eine Verbindung zwischen den Funktionsknoten spezifizieren.

14. Vorrichtung nach den Ansprüchen 9-13, **dadurch gekennzeichnet, dass** die Vorrichtung für Folgendes ausgelegt ist:

Erzeugen digitaler Steuerungsparameter, die kombinatorische Logik für mindestens einen Funktionsknoten spezifizieren.

15. Die Vorrichtung nach den Ansprüchen 9-13, **dadurch gekennzeichnet, dass** die Vorrichtung für Folgendes ausgelegt ist:

Erzeugen digitaler Steuerungsparameter, die mindestens eine Zustandsmaschine für mindestens einen Funktionsknoten spezifizieren.

16. Vorrichtung nach Anspruch 9-13, **dadurch gekennzeichnet, dass** die Vorrichtung für Folgendes ausgelegt ist:

Erzeugen digitaler Steuerungsparameter, die mindestens ein Pipeline-Bauelement für mindestens einen Funktionsknoten spezifizieren.

17. Datenflussmaschine, die durch die Vorrichtung nach einem der Ansprüche 9-16 erzeugt wird, und die Folgendes umfasst:

einen ersten Satz Hardware-Elemente (201-205), die dafür ausgelegt sind, eine Datentransformation auszuführen,
einen zweiten Satz Hardware-Elemente (206-215), der den ersten Satz Hardware-Elemente (201-205) miteinander verbindet, und
elektronische Schaltungen, die mindestens eine formale Regel für jedes des ersten Satzes Hardware-Elemente (201-205) festlegen, **dadurch gekennzeichnet, dass**
die elektronischen Schaltungen, die die formale Regel festlegen, einen Steuerungseingang haben.

18. Datenflussmaschine nach Anspruch 17, **dadurch gekennzeichnet, dass** mindestens ein Element des zweiten Satzes Hardware-Elemente die Form von Speicherelementen hat, auf die unabhängig parallel zugegriffen werden kann.

19. Datenflussmaschine nach den Ansprüchen 17-18, **dadurch gekennzeichnet, dass**
mindestens ein Element des zweiten Satzes Hardware-Elemente die Form eines Registers, eines Flipflop oder eines Pufferspeicher hat.

20. Datenflussmaschine nach den Ansprüchen 17-19, **dadurch gekennzeichnet, dass**
mindestens ein Element in dem ersten Satz Hardware-Elemente die Form einer kombinatorischen Logik hat.

21. Datenflussmaschine nach den Ansprüchen 17-19, **dadurch gekennzeichnet, dass**
mindestens ein Element in dem ersten Satz Hardware-Elemente die Form mindestens einer Zustandsmaschine hat.

22. Datenflussmaschine nach den Ansprüchen 17-19, **dadurch gekennzeichnet, dass** mindestens ein Element in dem ersten Satz Hardware-Elemente die Form eines Pipeline-Bauelements hat.

23. Datenflussmaschine nach den Ansprüchen 17-22, **dadurch gekennzeichnet, dass**
die Datenflussmaschine mittels eines ASIC, FPGA, CPLD oder eines anderen PLD implementiert wird.

24. Computerprogrammprodukt, das direkt in den Speicher einer elektronischen Vorrichtung mit digitalen Computerfähigkeiten geladen werden kann, und das Software-Codeabschnitte umfasst, um die Schritte nach einem der Ansprüche 1-8 auszuführen, wenn das Produkt durch die elektronische Vorrichtung abgearbeitet wird.

25. Computerprogrammprodukt nach Anspruch 24, das auf einem Computer-lesbaren Medium verkörpert ist.

**Revendications**

1. Procédé de génération de paramètres de commande numérique pour effectuer la mise en oeuvre d'une circuiterie logique numérique constituant une machine de circulation de données à partir d'une représentation graphique comprenant des noeuds fonctionnels (101-105) avec au moins une entrée ou au moins une sortie, et des liaisons indiquant les interconnexions entre les noeuds fonctionnels (101-105), la génération de paramètres de commande numérique spécifiant un premier ensemble d'éléments matériels (201-205) pour effectuer les fonctions desdits noeuds fonctionnels du graphique (101-105),
la génération de paramètres de commande numérique spécifiant un deuxième ensemble d'éléments matériels (206-215), lesquels éléments matériels sont spécifiés pour permettre un transfert de données entre les éléments matériels dudit premier ensemble d'éléments matériels (201-205) en fonction des liaisons entre les noeuds fonctionnels (101-105), et
la génération de paramètres de commande numérique spécifiant à une circuiterie électronique d'effectuer une règle d'amorçage pour au moins un élément matériel dudit premier ensemble d'éléments matériels (201-205), **caractérisé en ce que**
ladite circuiterie électronique effectuant la règle d'amorçage comprend une entrée de commande.

2. Procédé selon la revendication 1, **caractérisé en ce que** la représentation graphique est un graphique dirigé.

3. Procédé selon la revendication 1 ou 2, **caractérisé en ce que**

la représentation graphique est générée à partir de spécifications de code source de haut niveau.

4. Procédé selon l'une quelconque des revendications 1 à 3, **caractérisé par**
la génération de paramètres de commande numérique spécifiant des éléments de mémoire indépendamment accessibles en parallèle pour au moins une liaison entre les noeuds fonctionnels.

5. Procédé selon l'une quelconque des revendications 1 à 4, **caractérisé par**
la génération de paramètres de commande numérique spécifiant des registres numériques, au moins un basculateur monostable et/ou au moins un verrou pour au moins une liaison entre les noeuds fonctionnels.

6. Procédé selon l'une quelconque des revendications précédentes, **caractérisé par**
la génération de paramètres de commande numérique spécifiant une logique combinatoire pour au moins un noeud fonctionnel.

7. Procédé selon l'une quelconque des revendications 1 à 5, **caractérisé par**
la génération de paramètres de commande numérique spécifiant au moins une machine d'état pour au moins un noeud fonctionnel.

8. Procédé selon l'une quelconque des revendications 1 à 5, **caractérisé par**
la génération de paramètres de commande numérique spécifiant au moins un dispositif canalisé pour au moins un noeud fonctionnel.

9. Appareil de génération de paramètres de commande numérique pour effectuer la mise en oeuvre d'une circuiterie logique numérique à partir d'une représentation graphique comprenant des noeuds fonctionnels (101-105) avec au moins une entrée ou au moins une sortie, et des liaisons indiquant les interconnexions entre les noeuds fonctionnels (101-105), dans lequel l'appareil est apte à effectuer :

la génération de paramètres de commande numérique spécifiant un premier ensemble d'éléments matériels (201-205) pour effectuer les fonctions desdits noeuds fonctionnels du graphique (101-105),
la génération de paramètres de commande numérique spécifiant un deuxième ensemble d'éléments matériels (206-215), lesquels éléments matériels (206-215) sont spécifiés pour permettre un transfert de données entre les éléments matériels dudit premier ensemble d'éléments matériels (201-205) en fonction des liaisons entre les noeud fonctionnels (101-105), et
la génération de paramètres de commande numérique spécifiant à une circuiterie électronique d'effectuer une règle d'amorçage pour au moins un élément matériel dudit premier ensemble d'éléments matériels (201-205), **caractérisé en ce que**
ladite circuiterie électronique effectuant la règle d'amorçage comprend une entrée de commande.

10. Appareil selon la revendication 9, **caractérisé en ce que** la représentation graphique est un graphique dirigé.

11. Appareil selon la revendication 9 ou 10, **caractérisé en ce que**
la représentation graphique est générée à partir de spécifications de code source de haut niveau.

12. Appareil selon l'une quelconque des revendications 9 à 11, **caractérisé en ce que** l'appareil est apte à effectuer :

la génération de paramètres de commande numérique spécifiant des éléments de mémoire indépendamment accessibles en parallèle pour au moins une liaison entre les noeuds fonctionnels.

13. Appareil selon l'une quelconque des revendications 9 à 12, **caractérisé en ce que** l'appareil est apte à effectuer :

la génération de paramètres de commande numérique spécifiant des registres numériques, au moins un basculateur monostable et/ou au moins un verrou pour au moins une liaison entre les noeuds fonctionnels.

14. Appareil selon l'une quelconque des revendications 9 à 13, **caractérisé en ce que** l'appareil est apte à effectuer :

la génération de paramètres de commande numérique spécifiant une logique combinatoire pour au moins un noeud fonctionnel.

**15.** Appareil selon l'une quelconque des revendications 9 à 13, **caractérisé en ce que** l'appareil est apte à effectuer :

la génération de paramètres de commande numérique spécifiant au moins une machine d'état pour au moins un noeud fonctionnel.

**16.** Appareil selon l'une quelconque des revendications 9 à 13, **caractérisé en ce que** l'appareil est apte à effectuer :

la génération de paramètres de commande numérique spécifiant au moins un dispositif canalisé pour au moins un noeud fonctionnel.

**17.** Machine de circulation de données générée par l'appareil selon l'une quelconque des revendications 9 à 16 comprenant :

un premier ensemble d'éléments matériels (201-205) aptes à effectuer une transformation de données, un deuxième ensemble d'éléments matériels (206-215) interconnectant le premier ensemble d'éléments matériels (201-205), et
une circuiterie électronique établissant au moins une règle d'amorçage pour chacun du premier ensemble d'éléments matériels (201-205), **caractérisée en ce que**
ladite circuiterie électronique établissant la règle d'amorçage comprend une entrée de commande.

**18.** Machine de circulation de données selon la revendication 17, **caractérisée en ce que**
au moins un élément du deuxième ensemble d'éléments matériels est sous la forme d'éléments de mémoire indépendamment accessibles en parallèle.

**19.** Machine de circulation de données selon la revendication 17 ou 18, **caractérisée en ce que**
au moins un élément du deuxième ensemble d'éléments matériels est sous la forme d'un registre, d'un basculateur monostable ou d'un verrou.

**20.** Machine de circulation de données selon l'une quelconque des revendications 17 à 19, **caractérisée en ce que**
au moins un élément dans le premier ensemble d'éléments matériels est sous la forme d'une logique combinatoire.

**21.** Machine de circulation de données selon l'une quelconque des revendications 17 à 19, **caractérisée en ce que**
au moins un élément dans le premier ensemble d'éléments matériels est sous la forme d'au moins une machine d'état.

**22.** Machine de circulation de données selon l'une quelconque des revendications 17 à 19, **caractérisée en ce que**
au moins un élément dans le premier ensemble d'éléments matériels est sous la forme d'un dispositif canalisé.

**23.** Machine de circulation de données selon l'une quelconque des revendications 17 à 22, **caractérisée en ce que**
la machine de circulation de données est mise en oeuvre au moyen d'un ASIC, d'un FPGA, d'un CPLD ou d'un autre PLD.

**24.** Produit de programme informatique chargeable directement dans la mémoire d'un dispositif électronique ayant des capacités informatiques numériques, comprenant des portions de code logiciel pour effectuer les étapes de l'une quelconque des revendications 1 à 8 lorsque ledit produit est exécuté par ledit dispositif électronique.

**25.** Produit de programme informatique selon la revendication 24, réalisé sur un support lisible par ordinateur.

**Fig. 1a**

**Fig. 1b**

Fig. 2

Fig. 3

404

Stall Valid ~402

Data 1 Data 2

Node — 401

Register —406

Stall valid

405 403

*Fig. 4a*

Fig. 4c

Fig. 4b

505  506

501

502  503

504

**Fig. 5a**

507

508

509

**Fig. 5b**

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5021947 A
- WO 0159593 A

- US 6145073 A

**Non-patent literature cited in the description**

- **VERDOSCIA.** *Conditional and Iterative Structures Using a Homogeneous Data Flow Graph Model*